(19) Europäisches Patentamt
European Patent Office
Office européen des brevets

(11) **EP 2 381 595 B1**

(12) **EUROPEAN PATENT SPECIFICATION**

(45) Date of publication and mention
of the grant of the patent:
**20.06.2012 Bulletin 2012/25**

(51) Int Cl.:
***H04B 10/148*** *(2006.01)*

(21) Application number: **10305417.7**

(22) Date of filing: **21.04.2010**

(54) **Phase skew compensation at a coherent optical receiver**

Phasenverschiebungskompensierung an einem kohärenten optischen Empfänger

Compensation de l'obliquité de phase dans un récepteur optique cohérent

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(43) Date of publication of application:
**26.10.2011 Bulletin 2011/43**

(73) Proprietor: **Alcatel Lucent**
**75007 Paris (FR)**

(72) Inventors:
• **Leven, Andreas**
**D-74321, BIETIGHEIM-BISSINGEN (DE)**
• **Constantini, Carlo**
**23880, CASATENOVO (IT)**
• **Cucchi, Silvio**
**20083, GAGGIANO (IT)**
• **Weisser, Stefan**
**D-90409, NUERNBERG (DE)**
• **Kaneda, Noriaki**
**WESTFIELD, 07090 NJ (US)**
• **Cenzato, Luca**
**36015, SCHIO (IT)**

(74) Representative: **Wetzel, Emmanuelle et al**
**Alcatel-Lucent Deutschland AG**
**Intellectual Property & Corporate Standards**
**Lorenzstrasse 10**
**70435 Stuttgart (DE)**

(56) References cited:
**EP-A1- 1 962 443      EP-A2- 1 986 352
US-B1- 6 917 031**

• **FATADIN I ET AL: "Compensation of Quadrature
Imbalance in an Optical QPSK Coherent
Receiver" IEEE PHOTONICS TECHNOLOGY
LETTERS, IEEE SERVICE CENTER,
PISCATAWAY, NJ, US LNKD- DOI:10.1109/LPT.
2008.2004630, vol. 20, no. 20, 15 October 2008
(2008-10-15), pages 1733-1735, XP011235273
ISSN: 1041-1135**

**Description**

**Technical Field**

The present invention relates to the field of optical communications, in particular to coherent optical receivers for optical communication networks. Even more in particular, the present invention relates to the compensation of a phase skew between in-phase and quadrature components at a coherent optical receiver for an optical communication network.

**Background Art**

In a known optical communication network, digital data are typically transmitted in the form of modulated optical signals. In particular, the digital data to be transmitted are used for digitally modulating an optical carrier, i.e. one or more parameters (amplitude and/or phase) of the optical carrier are varied according to the digital data thereby generating a modulated optical signal. The modulated optical signal may be expressed by the following equation:

$$s(t)=A \cos(2\pi ft-\theta) = [A \cos\theta] \cos(2\pi ft) + [A \sin\theta] \sin(2\pi ft), \qquad [1]$$

where A is the amplitude of the modulated optical signal, f is the frequency of the modulated optical signal, and $\theta$ is the phase of the modulated optical signal. Different types of digital modulations are known, such as for instance: phase modulations (PSK, DPSK, QPSK, etc.) wherein $\theta$ is varied according to the digital data to be transmitted, and amplitude-phase modulations (QAM, etc.) where both A and $\theta$ are varied according to the digital data to be transmitted.

More particularly, the digital data to be transmitted typically comprise a sequence of symbols, each symbol comprising a predefined number M of bits. Hence, $2^M$ possible symbols $S_i$ ($i=1, ...2^M$) may be transmitted. As an example, if a QPSK modulation is used, M=2 and accordingly the possible symbols $S_i$ are $2^2=4$, i.e. $S_1=00$, $S_2=01$, $S_3=10$, $S_4=11$.

According to a digital phase modulation, each possible symbol $S_i$ is associated to a respective value $\theta_i$ of the phase $\theta$. Therefore, the number of possible values $\theta_i$ of the phase $\theta$ is $2^M$. For instance, according to the above mentioned QPSK modulation, the possible values $\theta_i$ of the phase $\theta$ are 4, e.g. $\pi/4$, $3/4\pi$, $5/4\pi$ and $7/4\pi$.

The modulated optical signal may be further expressed by the following equation:

$$s(t)=I \cos(2\pi ft) + Q \sin(2\pi ft), \qquad [2]$$

where I= A cos$\theta$ is typically termed in-phase component, while Q= A sin$\theta$ is typically termed quadrature component. The in-phase component I and the quadrature component Q are ideally orthogonal, i.e. the integral of their product I·Q over a period 1/f is zero.

Hence, according to a digital phase modulation, each possible symbol $S_i$ is biuniquely associated to a value $I_i=$ A cos$\theta_i$ of the in-phase component I and to a value $Q_i=$ A sin$\theta_i$ of the quadrature component Q. The possible symbols $S_i$ may be represented in a Cartesian plane (hereinafter referred to as I-Q plane) as points ($I_i$, $Q_i$) whose Cartesian coordinates are $I_i=$ A cos$\theta_i$ and $Q_i=$ A sin$\theta_i$. The possible symbols $S_i$ then lie on a circumference in the I-Q plane. For instance, according to the QPSK modulation cited above, if A=1 and the possible values $\theta_i$ of the phase $\theta$ are $\pi/4$, $3/4\pi$, $5/4\pi$ and $7/4\pi$, the possible symbols $S_1$, $S_2$, $S_3$ and $S_4$ can be represented as the points ($\sqrt{2}/2$, $\sqrt{2}/2$), ($-\sqrt{2}/2$, $\sqrt{2}/2$), ($-\sqrt{2}/2$, $-\sqrt{2}/2$) and ($\sqrt{2}/2$, $-\sqrt{2}/2$), respectively.

At the reception side, the modulated optical signal s(t) is typically demodulated for retrieving the original digital data. A known receiver suitable for demodulating the modulated optical signal is the so-called "coherent optical receiver".

A coherent optical receiver typically comprises a local oscillator which generates a local optical carrier cos($2\pi ft$) having frequency substantially equal to the frequency f of the modulated optical signal s(t). Then, the local optical carrier cos($2\pi ft$) is split in two and a portion thereof is phase-shifted by $\pi/2$, thereby providing a first demodulation optical carrier cos($2\pi ft$) and a second demodulation optical carrier sin($2\pi ft$).

The coherent optical receiver then typically combines the received modulated optical signal s(t) with the first demodulation optical carrier cos($2\pi ft$) and with the second demodulation optical carrier sin($2\pi ft$), and usually performs a photoelectric conversion of the resulting optical signals, thereby deriving the in-phase component I' and the quadrature component Q' of the received modulated optical signal in the form of electrical signals. The in-phase component I' and the quadrature component Q' basically correspond to the in-phase component I and quadrature component Q of the modulated optical signal s(t), except for noise and/or distortion introduced by propagation of the modulated optical signal s(t) along the optical link and/or by processing of the received modulated optical signal at the analog portion of the receiver.

Then, the coherent optical receiver typically performs an analog-to-digital conversion of the in-phase component I' and the quadrature component Q', and subsequently digitally processes them for retrieving the digital data originally transmitted. In particular, digitally processing typically comprises sampling the in-phase component I' and the quadrature component Q', thereby providing couples of samples $I'_k$ and $Q'_k$ of the components I' and Q', respectively. The sampling rate is typically higher than the symbol rate (e.g. twice the symbol rate). If the sampling rate is equal to the symbol rate, each couple is associated to a respective received symbol $S'_k$. Each received symbol $S'_k$ can be represented in the I-Q plane as a point $(I'_k, Q'_k)$ whose Cartesian coordinates are $I'_k$ and $Q'_k$. Each point $(I'_k, Q'_k)$ is typically compared with all the points $(I_i, Q_i)$ associated to the possible symbols $S_i$ for determining the closest one (i.e. the one having the minimum distance in the I-Q plane). The possible symbol $S_i$ corresponding to the closest among the points $(I_i, Q_i)$ is then assumed to be the symbol actually transmitted.

The patent application US 6,917,031 discloses a method for quadrature phase angle error correction in a coherent receiver by means of digital signal processing, where the first and second detected baseband signals are multiplied by coefficients that are a function of the estimate of said quadrature error.

The application EP 1 986 352 discloses a 90° hybrid circuit phase control circuit adapted to generate a feedback signal to the hybrid as a function of the correlation between the in-phase and quadrature components of the electrical signal.

## Summary of the invention

The above mentioned splitting and shifting operations carried over the local optical carrier cos(2πft) generated at the coherent optical receiver can be source of a "phase skew" ε between the first demodulation optical carrier cos(2πft) and the second demodulation optical carrier sin(2πft), i.e. the phase difference between the first demodulation optical carrier cos(2πft) and the second demodulation optical carrier sin(2πft) is not exactly π/2. In other words, the first demodulation optical carrier is cos(2πft+ε).

When the modulated optical signal s(t) is combined with the first demodulation carrier cos(2πft+ε) and with the second demodulation carrier sin(2πft), the in-phase component I' and the quadrature component Q' resulting from this combining are disadvantageously not orthogonal but they are cross-correlated, i.e. the integral of their product over a period 1/f is equal to sin(ε). Therefore, disadvantageously, when the coherent optical receiver performs the analog-to-digital conversion of the in-phase component I' and the quadrature component Q', and subsequently digitally processes them, the original digital data can not be retrieved with sufficient accuracy.

As an example, for a digital phase modulation, in the presence of a phase skew ε (for simplicity, further effects such as noise, attenuation and distortion are not considered), the points $(I'_k, Q'_k)$ have coordinates $I'_k = A \cos(\theta_k - \varepsilon)$ and $Q'_i = A \sin(\theta_k)$. Therefore, in the I-Q plane the points $(I'_k, Q'_k)$ lie on an ellipse if |ε|<π/2, or on a segment if |ε|=π/2.

For instance, if the above mentioned QPSK modulation is used and the phase skew is ε=π/2, each received symbol $S'_k$ can be represented as one of two points $(I'_k, Q'_k)$ lying on a segment in the I-Q plane, the two points $(I'_k, Q'_k)$ being $(\sqrt{2}/2, \sqrt{2}/2)$ and $(-\sqrt{2}/2, -\sqrt{2}/2)$, irrespective of the symbol actually transmitted. Thus, for each point $(I'_k, Q'_k)$, the possible symbol associated to the closest point is $S_1$ or $S_3$. Therefore, if $S_2$ or $S_4$ was originally transmitted, it can not be correctly retrieved.

In principle, the phase skew may be compensated by adding a quadrature term to the in-phase component I' and adding an in-phase term to the quadrature component Q'. These quadrature and in-phase terms are computed by multiplying the quadrature component Q' and the in-phase component I', respectively, by a common cross-gain factor G depending on the cross-correlation between the in-phase component I' and the quadrature component Q'.

However, disadvantageously, adding the quadrature and in-phase terms to the in-phase component I' and to the quadrature component Q' modifies the power of the two components. This is disadvantageous in that, for allowing proper retrieval of the digital data originally transmitted, both the in-phase component I' and the quadrature component Q', as received by the digital portion, should have their powers constantly equal to a nominal value.

Accordingly, the inventors have addressed the problem of providing a coherent optical receiver which is able to compensate the phase skew between the in-phase component and the quadrature component, which overcomes the aforesaid drawback.

In particular, the inventors have addressed the problem of providing a coherent optical receiver which is able to compensate the phase skew between the in-phase component and the quadrature component and that, in the meanwhile, does not modify the power of the in-phase component and of the quadrature component.

According to a first aspect, the present invention provides a coherent optical receiver for an optical communication network, the coherent optical receiver being configured to receive a modulated optical signal and to process the modulated optical signal for generating an in-phase component and a quadrature component, the optical coherent receiver comprising a phase skew compensator in turn comprising:

- a first digital circuit configured to provide:

  - a phase skew compensated in-phase component as a sum of the in-phase component multiplied by a first gain and the quadrature component multiplied by a second gain; and
  - a phase skew compensated quadrature component as a sum of the in-phase component multiplied by a third gain and the quadrature component multiplied by a fourth gain; and

- a second digital circuit retroactively connected between an output and a control input of the first digital circuit and configured to compute the first gain, the second gain, the third gain and the fourth gain as functions of an estimated cross-correlation between the phase skew compensated in-phase component and the phase skew compensated quadrature component.

Preferably, the second digital circuit is configured to compute the first gain and the fourth gain as a function of the estimated cross-correlation according to the following equation:

$$G11 = G22 = \frac{\cos(\operatorname{asin}(R[m])/2)}{2\cos^2(\operatorname{asin}(R[m])/2) - 1},$$

G11 being the first gain, G22 being the fourth gain and R[m] being the estimated cross-correlation.
Preferably, the second digital circuit is configured to compute the second gain and the third gain as a function of the estimated cross-correlation according to the following equation:

$$G12 = G21 = \frac{-\sin(\operatorname{asin}(R[m])/2)}{2\cos^2(\operatorname{asin}(R[m])/2) - 1},$$

G12 being the second gain, G21 being the third gain and R[m] being the estimated cross-correlation.
Preferably, the second digital circuit comprises a multiply-and-add module and an accumulator connected at the output of the first digital circuit, wherein:

- the multiply-and-add module is configured to receive N samples of the phase skew compensated in-phase component and N samples of the phase skew compensated quadrature component from the first digital circuit, N being an integer equal to or higher than 1, and to calculate a sum according to the following equation:

$$S = \sum_{k=1}^{N} I_k^* \cdot Q_k^*,$$

  S being the sum, $I_k^*$ being the N samples of the phase skew compensated in-phase component and $Q_k^*$ being the N samples of the phase skew compensated quadrature component; and
- the accumulator is configured to update its content by adding the sum to it, thereby obtaining the estimated cross-correlation.

Preferably, the second digital circuit further comprises a multiplier interposed between the multiply-and-add module and the accumulator, the multiplier being configured to multiply the sum by an adaptation factor before forwarding it to the accumulator.
Preferably, the multiply-and-add module is configured to select a subset of the N samples of the phase skew compensated in-phase component and the N samples of the phase skew compensated quadrature component, and to calculate the sum according to the selected subset.

Preferably, the second digital circuit further comprises a first lookup table and a second lookup table, wherein:

- the first lookup table stores a number of possible cross-correlation values and a same number of corresponding possible values of the first gain calculated according to the following equation:

$$ G11_i = \frac{\cos(\mathrm{asin}(R_i)/2)}{2\cos^2(\mathrm{asin}(R_i)/2) - 1} , $$

$R_i$ being the number of possible cross-correlation values and $G11_i$ being the same number of corresponding possible values of the first gain; and

- the second lookup table stores the number of possible cross-correlation values and the same number of corresponding possible values of the second gain calculated according to the following equation:

$$ G12_i = \frac{-\sin(\mathrm{asin}(R_i)/2)}{2\cos^2(\mathrm{asin}(R_i)/2) - 1} , $$

$R_i$ being the number of possible cross-correlation values and $G12_i$ being the same number of corresponding possible values of the second gain.

Preferably, the first lookup table is configured to receive the estimated cross-correlation, to determine, among the number of possible cross-correlation values, the possible cross-correlation value closest to the estimated cross-correlation, and to set the first gain and the fourth gain equal to the one of the same number of corresponding possible values of the first gain that corresponds to the closest possible cross-correlation value; the second lookup table is configured to receive the estimated cross-correlation, to determine, among the number of possible cross-correlation values, the possible cross-correlation value closest to the estimated cross-correlation, and to set the second gain and the third gain equal to the one of the same number of corresponding possible values of the second gain that corresponds to the closest possible cross-correlation value.

Alternatively, preferably, the second digital circuit further comprises a lookup table and a computation module, wherein:

- the computation module is configured receive the estimated cross-correlation and to compute the second gain and the third gain according to the following equation:

$$ G12 = G21 = \frac{-\sin(\mathrm{asin}(R[m])/2)}{2\cos^2(\mathrm{asin}(R[m])/2) - 1} , $$

G11 being the first gain, G22 being the fourth gain and R[m] being the estimated cross-correlation; and

- the lookup table stores a number of possible values of the second gain and a same number of corresponding possible values of the first gain calculated according to the following equation:

$$ G11_i = 1 + \frac{3}{2} G12_i^{\,2} , $$

$G12_i$ being the number of possible values of the second gain and $G11_i$ being the same number of corresponding possible values of the first gain.

In this case, preferably, the lookup table is configured to receive the computed second gain from the computation module, to determine, among the number of possible values of the second gain, the possible second gain value closest to the computed second gain and to set the first gain and the fourth gain equal to the one of the same number of corresponding possible values of the first gain that corresponds to the closest possible second gain value.

Preferably, the phase skew compensator is an ASIC module or an FPGA module.

According to a second aspect thereof, the present invention provides a node for an optical communication network, the node comprising a coherent optical receiver as set forth above.

According to a third aspect thereof, the present invention provides an optical communication network comprising a node as set forth above.

According to a fourth aspect thereof, the present invention provides a method for compensating a phase skew between an in-phase component and a quadrature component of a modulated optical signal received at a coherent optical receiver for an optical communication network, the method comprising:

- adding the in-phase component multiplied by a first gain and the quadrature component multiplied by a second gain, thereby providing a phase skew compensated in-phase component;
- adding the in-phase component multiplied by a third gain and the quadrature component multiplied by a fourth gain, thereby providing a phase skew compensated quadrature component;
- estimating a cross-correlation between the phase skew compensated in-phase component and the phase skew compensated quadrature component; and
- retroactively computing the first gain, the second gain, the third gain and the fourth gain as functions of the estimated cross-correlation.

## Brief description of the drawings

Embodiments of the invention will be better understood by reading the following detailed description, given by way of example and not of limitation, to be read with reference to the accompanying drawings, wherein:

- Figure 1 schematically shows a block diagram of a coherent optical receiver according to an embodiment of the present invention;
- Figure 2 schematically shows a block diagram of a phase skew compensator comprised within the coherent optical receiver of Figure 1; and
- Figure 3 schematically shows a block diagram of a phase skew compensator comprised within the coherent optical receiver of Figure 1, according to an advantageous variant.

## Detailed description of preferred embodiments of the invention

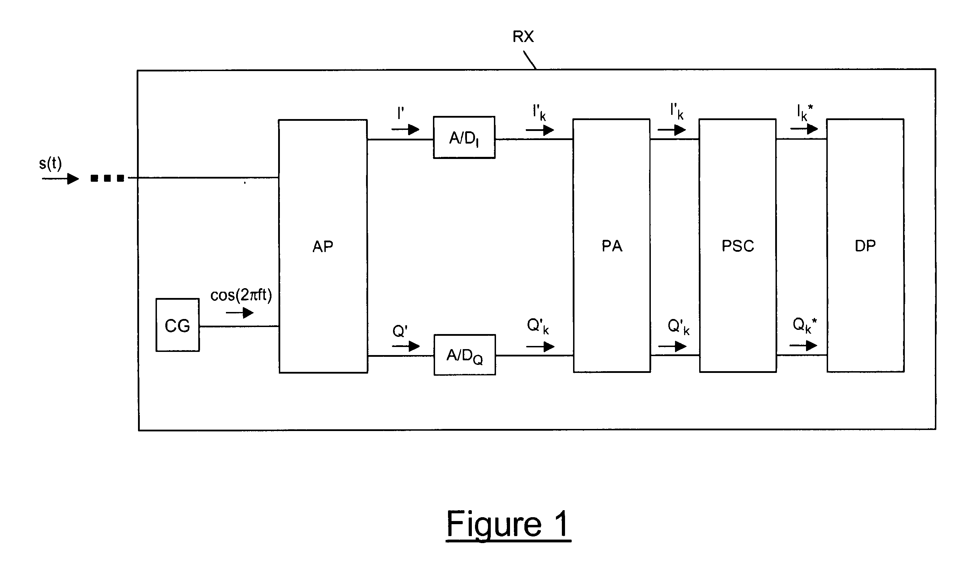

Figure 1 shows a block diagram of a coherent optical receiver RX for a node (not shown in the drawings) of an optical communication network, according to a preferred embodiment of the present invention.

The coherent optical receiver RX preferably comprises a carrier generator CG, an analog portion AP, an in-phase analog-to-digital converter $A/D_i$, a quadrature analog-to-digital converter $A/D_Q$, a power adjuster PA, a phase skew compensator PSC and a digital portion DP. The coherent optical receiver RX may comprise other modules that are not shown in the drawings, as they are not relevant to the present description.

The analog portion AP preferably has two inputs and two outputs. One of the inputs of the analog portion AP is connected to the output of the carrier generator CG, while the other one substantially corresponds to the input of the coherent optical receiver RX.

One of the outputs of the analog portion AP is preferably connected to the in-phase analog-to-digital converter $A/D_I$, while the other output of the analog portion AP is preferably connected to the quadrature analog-to-digital converter $A/D_Q$.

The power adjuster PA preferably has two inputs and two outputs. The outputs of the in-phase analog-to-digital converter $A/D_I$ and the quadrature analog-to-digital converter $A/D_Q$ are preferably connected to the inputs of the power adjuster PA.

The phase skew compensator PSC preferably has two inputs and two outputs. The outputs of the power adjuster PA are preferably connected to the inputs of the phase skew compensator PSC.

The digital portion DP has two inputs, which are preferably connected to the outputs of the phase skew compensator PSC.

When a modulated optical signal $s(t)=A\cos(2\pi ft-\theta)$ is received at the input of the coherent optical receiver RX, it is provided at the input of the analog portion AP. In the meanwhile, the carrier generator CG preferably generates a first demodulation optical carrier $\cos(2\pi ft+\varepsilon)$, having frequency substantially equal to the frequency f of the modulated optical signal s(t). The first demodulation carrier $\cos(2\pi ft)$ is provided at the input of the analog portion AP, which generates a second demodulation optical carrier $\sin(2\pi ft)$, whose frequency is also substantially equal to the frequency f of the modulated optical signal s(t). $\varepsilon$ is the phase skew between the first and second demodulation carriers. Then, the analog portion AP combines the modulated optical signal s(t) with the first demodulation carrier cos(2πft+ε) and opto-electrically converts the result, thereby providing an in-phase component I'. Substantially at the same time, the analog portion AP combines the modulated optical signal s(t) with the second demodulation optical carrier sin(2πft) and opto-electrically converts the result, thereby providing a quadrature component Q'. The components I' and Q' provided at the output of the analog portion AP are preferably in the form of analog electrical signals.

The in-phase analog-to-digital converter A/D$_I$ preferably receives the in-phase component I' and samples it in order to provide, at its output, a sequence of in-phase samples I'$_k$. Substantially at the same time, the quadrature analog-to-digital converter A/D$_Q$ preferably receives the quadrature component Q' and samples it in order to provide, at its output, a sequence of quadrature samples Q'$_k$. Then, the power adjuster PA preferably adjusts the power of the in-phase samples I'$_k$ and the quadrature samples Q'$_k$ so that their powers have a same nominal value. The operation of the power adjuster PA will not be described in further detail, since it is not relevant to the present description.

Preferably, the phase skew compensator PSC receives the in-phase samples I'$_k$ and the quadrature samples Q'$_k$ and compensates the effects induced on the components I' and Q' by the phase skew $_E$, thereby providing at its output phase skew compensated in-phase samples I$_k$* and phase skew compensated quadrature samples Q$_k$*, as it will be described in detail herein after.

Then, the phase skew compensator PSC preferably forwards the phase skew compensated in-phase samples I$_k$* and the phase skew compensated quadrature samples Q$_k$* to the digital portion DP, that processes them for retrieving the digital data originally transmitted. The operation of the digital portion DP depends on the type of digital modulation applied to the modulated optical signal s(t), and will not be described in further detail, since it is not relevant to the present description.

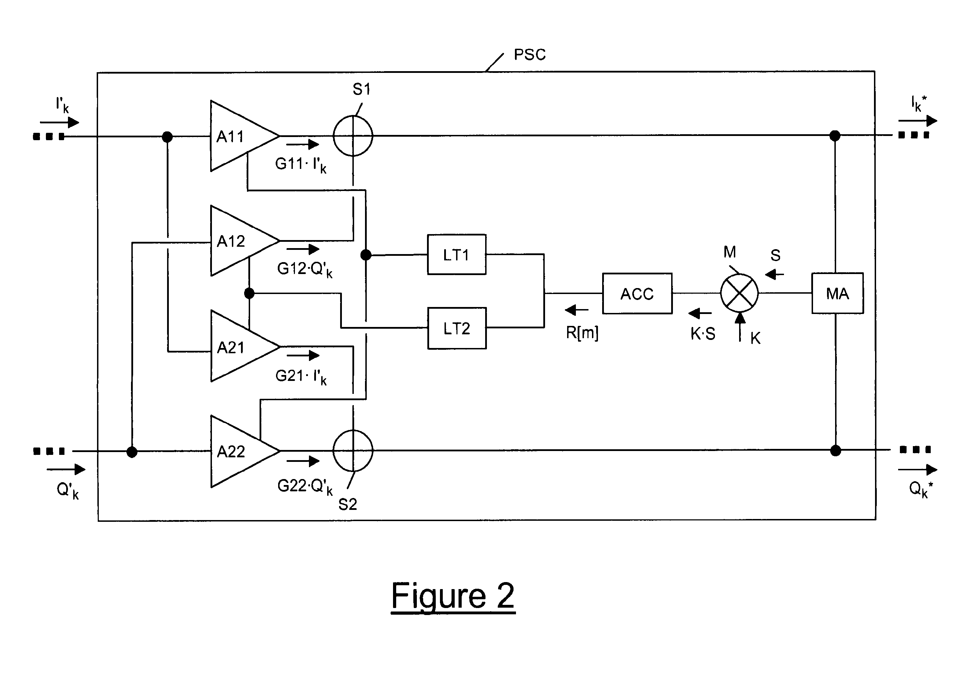

With reference to Figure 2, the phase skew compensator PSC according to a preferred embodiment of the present invention will be now described in detail.

As mentioned above, in the presence of a phase skew ε, the in-phase samples I'$_k$ and the quadrature samples Q'$_k$ received by the phase skew compensator PSC are I'$_k$=A cos(θ$_k$-ε) and Q'$_k$=A sin(θ$_k$). Therefore, in the I-Q plane, the points (I'$_k$, Q'$_k$) generally lie on an ellipse tilted by 45° with respect to the Cartesian axes of the I-Q plane. It follows that the ellipse crosses its axes (i.e. the bisector of the first and third quadrants and the bisector of the second and fourth quadrants of the I-Q plane) in correspondence of two points P'1, P'2 in the I-Q plane such that I'$_k$ = Q'$_k$ and of two points P'3, P'4 such that I'$_k$= - Q'$_k$. The condition I'$_k$ = Q'$_k$ is satisfied when:

$$\theta_k = 1/4 \cdot (2\varepsilon + \pi) \qquad\qquad [3a]$$

while the condition I'$_k$= -Q'$_k$ is satisfied when:

$$\theta_k = 1/4 \cdot (2\varepsilon + 3\pi). \qquad\qquad [3b]$$

Accordingly, the points P'1, P'2, P'3 and P'4 have the following coordinates:

$$I(P'1) = A\sin(1/4 \cdot (2\varepsilon + \pi)) \text{ and } Q(P'1) = A\sin(1/4 \cdot (2\varepsilon + \pi));$$

$$I(P'2) = -A\sin(1/4 \cdot (2\varepsilon + \pi)) \text{ and } Q(P'2) = -A\sin(1/4 \cdot (2\varepsilon + \pi));$$

$$I(P'3) = -A\sin(1/4 \cdot (2\varepsilon + 3\pi)) \text{ and } Q(P'3) = A\sin(1/4 \cdot (2\varepsilon + 3\pi));$$

and

$$I(P'4) = A\sin(1/4 \cdot (2\varepsilon + 3\pi)) \text{ and } Q(P'4) = -A\sin(1/4 \cdot (2\varepsilon + 3\pi)).$$

In the absence of the phase skew ε, the points ($I'_k$, $Q'_k$) would lie on a circumference that crosses the bisectors of the I-Q plane in correspondence of four points P1, P2, P3 and P4 having the following coordinates:

$$I(P1)=A\sqrt{2}/2 \text{ and } Q(P1)=A\sqrt{2}/2;$$

$$I(P2)=-A\sqrt{2}/2 \text{ and } Q(P2)=-A\sqrt{2}/2;$$

$$I(P3)=-A\sqrt{2}/2 \text{ and } Q(P3)=A\sqrt{2}/2;$$

and

$$I(P4)=A\sqrt{2}/2 \text{ and } Q(P4)=-A\sqrt{2}/2.$$

Therefore, the phase skew ε may be compensated by applying to the points ($I'_k$, $Q'_k$) a transformation equivalent to that transforming the coordinates of the points P'1, P'2, P'3 and P'4 into the coordinates of the points P1, P2, P3 and P4, respectively. Advantageously, this transformation does not modify the power the of in-phase component $I'_k$ and the quadrature component $Q'_k$, since the amplitude A remains the same. This transformation comprises applying the following steps to each point ($I'_k$, $Q'_k$):

- rotating the point ($I'_k$, $Q'_k$) by -45°;
- multiplying $I'_k$ by $F_I=(\sqrt{2}/2)/\sin(1/4\cdot(2\varepsilon+\pi))$;
- multiplying $Q'_k$ by $F_Q=(\sqrt{2}/2)/\sin(1/4\cdot(2\varepsilon+3\pi))$; and
- counter-rotating the point ($F_I\cdot I'_k$, $F_Q\cdot Q'_k$) by 45°.

Thus, in matrix notation, the phase skew compensated in-phase sample $I_k^*$ and the phase skew compensated quadrature sample $Q_k^*$ can be obtained by implementing the following equation:

$$\begin{bmatrix} I_k^* \\ Q_k^* \end{bmatrix} = \begin{bmatrix} \sqrt{2}/2 & -\sqrt{2}/2 \\ \sqrt{2}/2 & \sqrt{2}/2 \end{bmatrix} \cdot \begin{bmatrix} F_I & 0 \\ 0 & F_Q \end{bmatrix} \cdot \begin{bmatrix} \sqrt{2}/2 & \sqrt{2}/2 \\ -\sqrt{2}/2 & \sqrt{2}/2 \end{bmatrix} \cdot \begin{bmatrix} I'_k \\ Q'_k \end{bmatrix} \quad [4]$$

or, equivalently:

$$\begin{bmatrix} I_k^* \\ Q_k^* \end{bmatrix} = \begin{bmatrix} G11 & G12 \\ G21 & G22 \end{bmatrix} \cdot \begin{bmatrix} I'_k \\ Q'_k \end{bmatrix} \quad [5]$$

where:

$$G11 = G22 = \frac{1}{2\sqrt{2}}\left(\frac{1}{\sin\left(\frac{1}{4}(2\varepsilon+\pi)\right)} + \frac{1}{\sin\left(\frac{1}{4}(2\varepsilon+3\pi)\right)}\right) = \frac{\cos(\varepsilon/2)}{2\cos^2(\varepsilon/2)-1} \qquad [6a]$$

and

$$G12 = G21 = \frac{1}{2\sqrt{2}}\left(\frac{1}{\sin\left(\frac{1}{4}(2\varepsilon+\pi)\right)} - \frac{1}{\sin\left(\frac{1}{4}(2\varepsilon+3\pi)\right)}\right) = \frac{-\sin(\varepsilon/2)}{2\cos^2(\varepsilon/2)-1}. \qquad [6b]$$

Moreover, the inventors have noticed that the phase skew ε may be estimated from the cross-correlation R between the in-phase component I' and the quadrature component Q', since the cross-correlation R is:

$$R = \frac{1}{\pi}\int_0^{2\pi}\cos(\theta-\varepsilon)\sin(\theta)d\theta = \sin(\varepsilon) \qquad [7]$$

and hence:

$$\varepsilon = \mathrm{asin}(R). \qquad [8]$$

Preferably, the phase skew compensator PSC of Figure 2 substantially implements the above equation [5].
In particular, the phase skew compensator PSC of Figure 2 preferably comprises a first amplifier A11, a second amplifier A12, a third amplifier A21, a fourth amplifier A22, a first adder S1, a second adder S2, a multiply-and-add module MA, a multiplier M, an accumulator ACC, a first lookup table LT1 and a second lookup table LT2.
In particular, the inputs of the first amplifier A11 and the third amplifier A21 are connected to one of the inputs of the phase skew compensator PSC. Similarly, the inputs of the second amplifier A12 and the fourth amplifier A22 are connected to the other input of the phase skew compensator PSC. The output of the first amplifier A11 and the output of the second amplifier A12 are connected to the inputs of the first adder S1, while the output of the third amplifier A21 and the output of the fourth amplifier A22 are connected to the inputs of the second adder S2. The amplifiers A11, A12, A21 and A22 are preferably digital amplifiers. The output of the first adder S1 and the output of the second adder S2 are connected to the inputs of the multiply-and-add module MA. The output of the multiply-and-add module MA is connected to one of the inputs of the multiplier M and the output of the multiplier M is connected to the input of the accumulator ACC. The output of the accumulator ACC is connected to the inputs of the first lookup table LT1 and the second lookup table LT2. The output of the first lookup table LT1 is connected to control inputs of the first amplifier A11 and the fourth amplifier A22, while the output of the second lookup table LT2 is connected to control inputs of the second amplifier A12 and the third amplifier A21.
The first lookup table LT1 preferably comprises a number (e.g. 256) of possible cross-correlation values $R_i$ and a number of corresponding possible values G11; of a first gain G11, computed according to the above equations [6a] and [8] as follows:

$$G11_i = \frac{\cos(\mathrm{asin}(R_i)/2)}{2\cos^2(\mathrm{asin}(R_i)/2)-1}. \qquad [9a]$$

Similarly, the second lookup table LT2 comprises the number of possible cross-correlation values $R_i$ and a number of corresponding possible values $G12_i$ of a second gain G12, computed according to the above equations [6b] and [8] as follows:

$$G12_i = \frac{-\sin(\operatorname{asin}(R_i)/2)}{2\cos^2(\operatorname{asin}(R_i)/2)-1}. \qquad [9b]$$

Preferably, the first lookup table LT1 and the second lookup table LT2 are ROM ("Read Only Memory") modules. For instance, if the first and second lookup tables LT1, LT2 comprise 256 memory locations, the possible cross-correlation values $R_i$ may be -128/128, -127/128, -126/128, ... 124/128, 125/128, 126/128 and 127/128. Hence, the resolution of the possible cross-correlation values is 1/128. In general, therefore, if the first and second lookup tables LT1, LT2 comprise M memory locations, the maximum achievable resolution is 1/(M/2).

The phase skew compensator PSC further preferably comprises a clock input (not shown in the drawings) configured to receive a clock signal from a clock unit (also not shown in the drawings) located at the coherent optical receiver RX, and to provide it to all the components of the phase skew compensator PSC for synchronizing their operation.

Herein after, the operation of the phase skew compensator PSC of Figure 2 will be described in detail. The following description is referred to the operation of the phase skew compensator PSC in a clock cycle of the above mentioned clock signal. Preferably, the operations described below are periodically repeated at each clock cycle.

Preferably, during each clock cycle, the phase skew compensator PSC receives from the power adjuster PA a number N of in-phase samples $I'_k$ and a number N of corresponding quadrature samples $Q'_k$. The number N preferably is an integer equal to or higher than 1.

The N in-phase samples $I'_k$ are preferably received by the first amplifier A11 and the third amplifier A21. The first amplifier A11 preferably multiplies each of the N in-phase samples $I'_k$ by the first gain G11 currently output by the first lookup table LT1, and forwards it to the first adder S1. Substantially at the same time, the third amplifier A21 preferably multiplies each of the N in-phase samples $I'_k$ by a third gain G21 and forwards it to the second adder S2. The third gain G21 is preferably equal to the second gain G12 that is currently output by the second lookup table LT2.

Substantially in parallel with respect to the operations above, the N quadrature samples $Q'_k$ are preferably received by the second amplifier A12 and the fourth amplifier A22. The second amplifier A12 preferably multiplies each of the N quadrature samples $Q'_k$ by the second gain G12 currently output by the second lookup table LT2, and forwards it to the first adder S1. Substantially at the same time, the fourth amplifier A22 preferably multiplies each of the N quadrature samples $Q'_k$ by a fourth gain G22 and forwards it to the second adder S2. The fourth gain G22 is preferably equal to the first gain G11 that is currently output by the first lookup table LT1.

The first adder S1 preferably receives the N products $G11\ I'_k$ from the first amplifier A11 and the N products $G12\ Q'_k$ from the second amplifier A12 and adds them thereby providing at its output N phase skew compensated in-phase samples $I_k^*$ according to the following equation:

$$I_k^* = G11\ I'_k + G12\ Q'_k. \qquad [10a]$$

The N phase skew compensated in-phase samples $I_k^*$ are then preferably provided at the output of the phase skew compensator PSC.

Similarly, the second adder S2 preferably receives the N products $G21\ I'_k$ from the third amplifier A21 and the N products $G22\ Q'_k$ from the fourth amplifier A22 and adds them thereby providing at its output N phase skew compensated quadrature samples $Q_k^*$ according to the following equation:

$$Q_k^* = G21\ I'_k + G22\ Q'_k. \qquad [10b]$$

The N phase skew compensated quadrature samples $Q_k^*$ are then preferably provided at the output of the phase skew compensator PSC.

Moreover, preferably, the N phase skew compensated in-phase samples $I_k^*$ provided at the output of the first adder S1 and the N phase skew compensated quadrature samples $Q_k^*$ provided at the output of the second adder S2 are received by the multiply-and-add module MA. The multiply-and-add module MA preferably comprises N multipliers and an adder with N inputs and a single output. Each of the N multipliers preferably multiplies one of the N phase skew compensated in-phase samples $I_k^*$ by the corresponding one of the N phase skew compensated quadrature samples

$Q_k^*$, and provides the result to the adder. The adder preferably calculates a sum S of all the N products $I_k^* \cdot Q_k^*$ received from the N multipliers according to the following equation:

$$S = \sum_{k=1}^{N} I_k^* \cdot Q_k^* . \qquad [11]$$

The multiply-and-add module MA may be configured to select a subset of L samples $I_k^*$ and $Q_k^*$ (L<N) and apply the above equation [11] only to the selected samples, thereby implementing a statistic downsampling. In this case, the multiply-and-add module MA advantageously comprises only L multipliers.

The multiply-and-add module MA preferably forwards the sum S to the multiplier M, that preferably multiplies the sum S by an adaptation factor K and forwards the result K·S to the accumulator ACC.

The accumulator ACC preferably adds the result K·S to its content according to the following equation:

$$R[m] = R[m-1] + K \cdot S , \qquad [12]$$

where R[m-1] is the content of the accumulator ACC at the end of the previous clock cycle and R[m] is the content of the accumulator ACC as updated during the current clock cycle. Basically, the accumulator ACC then acts as an integrator calculating the integral of K·S over successive clock cycles. The content of the accumulator ACC R[m] is then basically an estimated cross-correlation between the phase skew compensated in-phase samples $I_k^*$ and the phase skew compensated quadrature samples $Q_k^*$.

The accumulator ACC preferably forwards its updated content R[m] to the first lookup table LT1 and to the second lookup table LT2.

The first lookup table LT1 preferably receives the estimated cross-correlation R[m], which is compared with the possible cross-correlation values $R_i$ stored therein. The first lookup table LT1 then preferably sets the first gain G11 and the fourth gain G22 substantially equal to the possible value $G11_i$ corresponding to the possible cross-correlation value $R_i$ closest to the estimated cross-correlation R[m]. The resulting first gain G11 and fourth gain G22 are then substantially provided by the following equation:

$$G11 = G22 = \frac{\cos(\mathrm{asin}(R[m])/2)}{2\cos^2(\mathrm{asin}(R[m])/2) - 1} . \qquad [13a]$$

Finally, the first lookup table LT1 forwards the first gain G11 to the first amplifier A11 and the fourth gain G22 to the fourth amplifier A22. The first amplifier A11 and the fourth amplifier A22 preferably use these values of the first gain G11 and the fourth gain G22 for multiplying the N samples $I'_k$ and $Q'_k$, respectively, that will be received during the next clock cycle.

Substantially at the same time, the second lookup table LT2 preferably receives the estimated cross-correlation R[m], which is compared with the possible cross-correlation values $R_i$ stored therein. The second lookup table LT2 then preferably sets the second gain G12 and the third gain G21 substantially equal to the possible value $G12_i$ corresponding to the possible cross-correlation value $R_i$ closest to the estimated cross-correlation R[m]. The resulting second gain G12 and third gain G21 are then substantially provided by the following equation:

$$G12 = G21 = \frac{-\sin(\mathrm{asin}(R[m])/2)}{2\cos^2(\mathrm{asin}(R[m])/2) - 1} . \qquad [13b]$$

Finally, the second lookup table LT2 forwards the second gain G12 to the second amplifier A12 and the third gain G21 to the third amplifier A21. The second amplifier A12 and the third amplifier A21 preferably use these values of the second gain G12 and the third gain G21 for multiplying the N samples $Q'_k$ and $I'_k$, respectively, that will be received during the next clock cycle.

Alternatively, instead of using the first and second lookup tables LT1 and LT2, the computations of equations [13a] and [13b] may be performed by suitable digital circuits arranged downstream the accumulator ACC and suitable for applying the equations [13a] and [13b] directly to the estimated cross-correlation R[m] output by the accumulator ACC. This alternative solution is preferred to the lookup table solution when the required resolution of the possible cross-correlation values $R_i$ is very reduced, and would therefore require lookup tables with a very high number of memory locations.

Advantageously, the phase skew compensator PSC described above is able to compensate the phase skew $\varepsilon$ between the in-phase component I' and the quadrature component Q', while at the same time it does not change their powers. Indeed, as discussed in detail above, the gains of the amplifiers are specifically selected for compensating the phase skew without changing the powers of the phase skew compensated in-phase samples $I_k^*$ and the phase skew compensated quadrature samples $Q_k^*$. Therefore, these powers are equal to the nominal values set by the power adjuster PA.

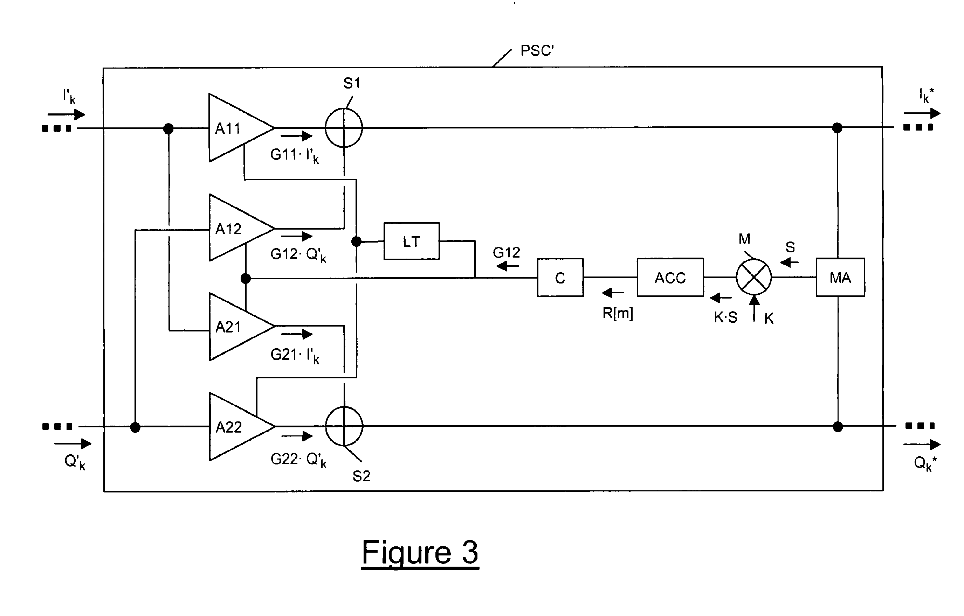

With reference to Figure 3, a phase skew compensator PSC' according to an advantageous variant will be now described in detail.

The phase skew compensator PSC' of Figure 3 is similar to the phase skew compensator PSC of Figure 2. Therefore, a detailed description of its structure will be omitted. However, unlike the phase skew compensator PSC of Figure 2, the phase skew compensator PSC' comprises only one lookup table LT and a computation module C. The computation module C preferably has an input connected at the output of the accumulator ACC and an output connected to the lookup table LT and to the control inputs of the second amplifier A12 and the third amplifier A21.

The lookup table LT preferably comprises a number of possible values $G12_i$ of the second gain G12 and a number of corresponding possible values $G11_i$ of a first gain G11, computed according to the following equation:

$$G11_i = \sqrt{2}\, G12_i^2 \sqrt{\frac{4+\dfrac{-1+\sqrt{8+G12_i^2}}{G12_i^2}}{-1+\sqrt{8+G12_i^2}}} \cong 1+\frac{3}{2}G12_i^2. \qquad [14]$$

Preferably, the lookup table LT is a ROM module.

In the following, the operation of the phase skew compensator PSC' of Figure 3 will be described in detail. Again, the following description is referred to the operation of the phase skew compensator PSC' in a clock cycle of the clock signal generated at the coherent optical receiver RX. Preferably, the operation described below is periodically repeated at each clock cycle.

At each clock cycle, the phase skew compensator PSC' receives N in-phase samples $I'_k$ and N quadrature samples $Q'_k$. The processing of the N samples $I'_k$ and $Q'_k$ by means of the amplifiers A11, A12, A21, A22, the adders S1, S2, the multiply-and-add module MA, the multiplier M and the accumulator ACC is substantially the same as described above with reference to Figure 2. Hence, a detailed description will not be repeated. It is only recalled that accumulator ACC preferably outputs an estimated cross-correlation R[m] according to the above equation [12].

According to this advantageous variant, the estimated cross-correlation R[m] is preferably forwarded to the computation module C, that preferably calculates the second gain G12 and the third gain G21 according to the equation [13b] reported above, i.e.:

$$G12 = G21 = \frac{-\sin(\mathrm{asin}(R[m])/2)}{2\cos^2(\mathrm{asin}(R[m])/2)-1}. \qquad [13b]$$

The computation module C preferably forwards the second gain G12 and the third gain G21 to the second amplifier A12 and the third amplifier A21, respectively. The second amplifier A12 and the third amplifier A21 preferably use these values of the second gain G12 and the third gain G21 for multiplying the N samples $Q'_k$ and $I'_k$, respectively, that will be received during the next clock cycle.

Moreover, substantially at the same time, the computation module C preferably forwards the second gain G12 to the lookup table LT.

The lookup table LT preferably receives the second gain G12, which is compared with the possible values $G12_i$ stored therein. The lookup table LT then preferably sets the first gain G11 and the fourth gain G22 substantially equal to the possible value $G11_i$ corresponding to the possible value $G12_i$ closest to the second gain G12 calculated by the computation module C. The resulting first gain G11 and fourth gain G22 are then substantially provided by the following equation:

$$G11 = G22 = \sqrt{2}\,G12^2 \, \frac{\sqrt{4 + \dfrac{-1 + \sqrt{8 + G12^2}}{G12^2}}}{-1 + \sqrt{8 + G12^2}} \cong 1 + \frac{3}{2}G12^2 \,. \qquad [15]$$

Finally, the lookup table LT forwards the first gain G11 to the first amplifier A11 and the fourth gain G22 to the fourth amplifier A22. The first amplifier A11 and the fourth amplifier A22 preferably use these values of the first gain G11 and the fourth gain G22 for multiplying the N samples $I'_k$ and $Q'_k$, respectively, that will be received during the next clock cycle.

Advantageously, also the phase skew compensator PSC' according to this advantageous variant is able to compensate the phase skew $\varepsilon$ between the in-phase component I' and the quadrature component Q', while the powers of the in-phase component I' and the quadrature component Q' are not modified by the phase skew compensator PSC' and they are thus equal to the nominal values as established by the power adjuster PA. Indeed, equation [15] expressing G11 and G22 as a function of G12 is basically obtained by combining the above equations [13a] and [13b].

Further, advantageously, the phase skew compensator PSC' according to this advantageous variant is simpler than the phase skew compensator PSC of Figure 2. Indeed, the phase skew compensator PSC' according to this advantageous variant advantageously comprises a single lookup table and thus it allows saving computational resources and costs.

The functions of the various elements shown in Figure 2 or in Figure 3 may be provided through the use of dedicated hardware, programmable hardware or a hardware capable of executing software in association with appropriate software. In particular, the functions of the various elements shown in Figure 2 or in Figure 3 are preferably provided through the use of one or more application specific integrated circuits (ASIC) and/or one or more field programmable gate arrays (FPGA). Preferably, the functions of the various elements shown in Figure 2 or in Figure 3 are provided through the use of a single ASIC or a single FPGA. Therefore, the expressions "first digital circuit" and "second digital circuit" mentioned in the claims are to be understood merely as functional aggregations of the elements of the phase skew compensator, and they should not be understood necessarily as physically separated circuits implemented on separated hardware devices.

**Claims**

1.    A coherent optical receiver (RX) for an optical communication network, said coherent optical receiver (RX) being configured to receive a modulated optical signal (s(t)) and to process said modulated optical signal (s(t)) for generating an in-phase component (I') and a quadrature component (Q'), said optical coherent receiver (RX) comprising a phase skew compensator (PSC, PSC') in turn comprising:

    - a first digital circuit (A11, A12, A21, A22, S1, S2) configured to provide:

        - a phase skew compensated in-phase component ($I_k^*$) as a sum of said in-phase component (I') multiplied by a first gain (G11) and said quadrature component (Q') multiplied by a second gain (G12); and
        - a phase skew compensated quadrature component ($Q_k^*$) as a sum of said in-phase component (I') multiplied by a third gain (G21) and said quadrature component (Q') multiplied by a fourth gain (G22); and

        - a second digital circuit (MA, M, ACC, LT1, LT2; MA, M, ACC, LT, C) retroactively connected between an output and a control input of said first digital circuit (A11, A12, A21, A22, S1, S2) and configured to compute said first gain (G11), said second gain (G12), said third gain (G21) and said fourth gain (G22) as functions of an estimated cross-correlation (R[m]) between said phase skew compensated in-phase component ($I_k^*$) and said phase skew compensated quadrature component ($Q_k^*$).

2.    The coherent optical receiver (RX) according to claim 1, wherein said second digital circuit (MA, M, ACC, LT1, LT2; MA, M, ACC, LT, C) is configured to compute said first gain (G11) and said fourth gain (G22) as a function of said estimated cross-correlation (R[m]) according to the following equation:

$$G11 = G22 = \frac{\cos(\mathrm{asin}(R[m])/2)}{2\cos^2(\mathrm{asin}(R[m])/2) - 1},$$

G11 being said first gain, G22 being said fourth gain and R[m] being said estimated cross-correlation.

3. The coherent optical receiver (RX) according to claim 1 or 2, wherein said second digital circuit (MA, M, ACC, LT1, LT2; MA, M, ACC, LT, C) is configured to compute said second gain (G12) and said third gain (G21) as a function of said estimated cross-correlation (R[m]) according to the following equation:

$$G12 = G21 = \frac{-\sin(\mathrm{asin}(R[m])/2)}{2\cos^2(\mathrm{asin}(R[m])/2) - 1},$$

G12 being said second gain, G21 being said third gain and R[m] being said estimated cross-correlation.

4. The coherent optical receiver (RX) according to any of the preceding claims, wherein said second digital circuit (MA, M, ACC, LT1, LT2; MA, M, ACC, LT, C) comprises a multiply-and-add module (MA) and an accumulator (ACC) connected at the output of said first digital circuit (A11, A12, A21, A22, S1, S2), wherein:

   - said multiply-and-add module (MA) is configured to receive N samples of said phase skew compensated in-phase component ($I_k^*$) and N samples of said phase skew compensated quadrature component ($Q_k^*$) from said first digital circuit (A11, A12, A21, A22, S1, S2), N being an integer equal to or higher than 1, and to calculate a sum (S) according to the following equation:

$$S = \sum_{k=1}^{N} I_k^* \cdot Q_k^*,$$

   S being said sum, $I_k^*$ being said N samples of the phase skew compensated in-phase component and $Q_k^*$ being said N samples of said phase skew compensated quadrature component; and
   - said accumulator (ACC) is configured to update its content (R[m-1]) by adding said sum (S) to it, thereby obtaining said estimated cross-correlation (R[m]).

5. The coherent optical receiver (RX) according to claim 4, wherein said second digital circuit (MA, M, ACC, LT1, LT2; MA, M, ACC, LT, C) further comprises a multiplier (M) interposed between said multiply-and-add module (MA) and said accumulator (ACC), said multiplier (M) being configured to multiply said sum (S) by an adaptation factor (K) before forwarding it to said accumulator (ACC).

6. The coherent optical receiver (RX) according to claim 4 or 5, wherein said multiply-and-add module (MA) is configured to select a subset of said N samples of said phase skew compensated in-phase component ($I_k^*$) and said N samples of said phase skew compensated quadrature component ($Q_k^*$), and to calculate said sum (S) according to said selected subset.

7. The coherent optical receiver (RX) according to any of the preceding claims, wherein said second digital circuit (MA, M, ACC, LT1, LT2; MA, M, ACC, LT, C) further comprises a first lookup table (LT1) and a second lookup table (LT2), wherein:

   - said first lookup table (LT1) stores a number of possible cross-correlation values ($R_i$) and a same number of corresponding possible values (G11;) of said first gain (G11) calculated according to the following equation:

$$G11_i = \frac{\cos(\text{asin}(R_i)/2)}{2\cos^2(\text{asin}(R_i)/2)-1},$$

$R_i$ being said number of possible cross-correlation values and $G11_i$ being said same number of corresponding possible values of said first gain; and
- said second lookup table (LT2) stores said number of possible cross-correlation values ($R_i$) and said same number of corresponding possible values ($G12_i$) of said second gain (G12) calculated according to the following equation:

$$G12_i = \frac{-\sin(\text{asin}(R_i)/2)}{2\cos^2(\text{asin}(R_i)/2)-1},$$

$R_i$ being said number of possible cross-correlation values and $G12_i$ being said same number of corresponding possible values of said second gain.

**8.** The coherent optical receiver (RX) according to claim 7, wherein:

- said first lookup table (LT1) is configured to receive said estimated cross-correlation (R[m]), to determine, among said number of possible cross-correlation values ($R_i$), the possible cross-correlation value closest to said estimated cross-correlation (R[m]), and to set said first gain (G11) and said fourth gain (G22) equal to the one of said same number of corresponding possible values ($G11_i$) of said first gain (G11) that corresponds to said closest possible cross-correlation value;
- said second lookup table (LT2) is configured to receive said estimated cross-correlation (R[m]), to determine, among said number of possible cross-correlation values ($R_i$), the possible cross-correlation value closest to said estimated cross-correlation (R[m]), and to set said second gain (G12) and said third gain (G21) equal to the one of said same number of corresponding possible values ($G12_i$) of said second gain (G12) that corresponds to said closest possible cross-correlation value.

**9.** The coherent optical receiver (RX) according to any of claims 1 to 6, wherein said second digital circuit (MA, M, ACC, LT1, LT2; MA, M, ACC, LT, C) further comprises a lookup table (LT) and a computation module (C), wherein:

- said computation module (C) is configured receive said estimated cross-correlation (R[m]) and to compute said second gain (G12) and said third gain (G21) according to the following equation:

$$G12 = G21 = \frac{-\sin(\text{asin}(R[m])/2)}{2\cos^2(\text{asin}(R[m])/2)-1},$$

G11 being said first gain, G22 being said fourth gain and R[m] being said estimated cross-correlation; and
- said lookup table (LT) stores a number of possible values ($G12_i$) of said second gain (G12) and a same number of corresponding possible values ($G11_i$) of said first gain (G11) calculated according to the following equation:

$$G11_i = 1 + \frac{3}{2}G12_i^2,$$

$G12_i$ being said number of possible values of said second gain and $G11_i$ being said same number of corresponding possible values of said first gain.

**10.** The coherent optical receiver (RX) according to claim 9, wherein said lookup table (LT) is configured to receive said computed second gain (G12) from said computation module (C), to determine, among said number of possible values (G12ᵢ) of said second gain (G12), the possible second gain value closest to said computed second gain (G12) and to set said first gain (G11) and said fourth gain (G22) equal to the one of said same number of corresponding possible values (G11ᵢ) of said first gain (G11) that corresponds to said closest possible second gain value.

11. The coherent optical receiver (RX) according to any of the preceding claims, wherein said phase skew compensator (PSC, PSC) is an ASIC module or an FPGA module.

12. A node for an optical communication network, said node comprising a coherent optical receiver (RX) according to any of the preceding claims.

13. An optical communication network comprising a node according to claim 12.

14. A method for compensating a phase skew ($\varepsilon$) between an in-phase component (I') and a quadrature component (Q') of a modulated optical signal (s(t)) received at a coherent optical receiver (RX) for an optical communication network, said method comprising:

- adding said in-phase component (I') multiplied by a first gain (G11) and said quadrature component (Q') multiplied by a second gain (G12), thereby providing a phase skew compensated in-phase component ($I_k^*$);
- adding said in-phase component (I') multiplied by a third gain (G21) and said quadrature component (Q') multiplied by a fourth gain (G22), thereby providing a phase skew compensated quadrature component ($Q_k^*$);
- estimating a cross-correlation (R[m]) between said phase skew compensated in-phase component ($I_k^*$) and said phase skew compensated quadrature component ($Q_k^*$); and
- retroactively computing said first gain (G11), said second gain (G12), said third gain (G21) and said fourth gain (G22) as functions of said estimated cross-correlation (R[m]).

**Patentansprüche**

1. Kohärenter optischer Empfänger (RX) für ein optisches Kommunikationsnetzwerk, wobei der besagte kohärente optische Empfänger (RX) dafür konfiguriert ist, ein moduliertes optisches Signal (s(t)) zu empfangen und das besagte modulierte optische Signal (s(t)) zu verarbeiten, um eine In-Phase-Komponente (I') und eine Quadratur-Komponente (Q') zu erzeugen, wobei der besagte kohärente optische Empfänger (RX) einen Phasenverschiebungskompensator (PSC, PSC') umfasst, welcher wiederum umfasst:

- Eine erste digitale Schaltung (A11, A12, A21, A22, S1, S2), konfiguriert für die Bereitstellung:

- Einer phasenverschiebungskompensierten In-Phase-Komponente ($I_k^*$) als eine Summe der besagten In-Phase-Komponente (I'), multipliziert mit einer ersten Verstärkung (G11), und der besagten Quadratur-Komponente (Q'), multipliziert mit einer zweiten Verstärkung (G12); und
- einer phasenverschiebungskompensierten Quadratur-Komponente ($Q_k^*$) als eine Summe der besagten In-Phase-Komponente (I'), multipliziert mit einer dritten Verstärkung (G21), und der besagten Quadratur-Komponente (Q'), multipliziert mit einer vierten Verstärkung (G22); und

- eine zweite digitale Schaltung (MA, M, ACC, LT1, LT2; MA, M, ACC, LT, C), welche nachträglich zwischen einem Ausgang und einem Steuereingang der besagten ersten digitalen Schaltung (A11, A12, A21, A22, S1, S2) angeschlossen und dafür konfiguriert ist, die besagte erste Verstärkung (G11), die besagte zweite Verstärkung (G12), die besagte dritte Verstärkung (G21) und die besagte vierte Verstärkung (G22) an Abhängigkeit von einer geschätzten Kreuzkorrelation (R[m]) zwischen der besagten phasenverschiebungskompensierten In-Phase-Komponente ($I_k^*$) und der besagten phasenverschiebungskompensierten Quadratur-Komponente ($Q_k^*$) zu berechnen.

2. Kohärenter optischer Empfänger (RX) nach Anspruch 1, wobei die besagte zweite digitale Schaltung (MA, M, ACC, LT1, LT2; MA, M, ACC, LT, C) dafür konfiguriert ist, die besagte erste Verstärkung (G11) und die besagte vierte Verstärkung (G22) in Abhängigkeit von der besagten geschätzten Kreuzkorrelation (R[m]) gemäß der folgenden Gleichung zu berechnen:

$$G11 = G22 = \frac{\cos(\mathrm{asin}(R[m])/2)}{2\cos^2(\mathrm{asin}(R[m])/2) - 1},$$

wobei G11 die besagte erste Verstärkung, G22 die besagte vierte Verstärkung und R[m] die besagte geschätzte Kreuzkorrelation darstellt.

3. Kohärenter optischer Empfänger (RX) nach Anspruch 1 oder 2, wobei die besagte zweite digitale Schaltung (MA, M, ACC, LT1, LT2; MA, M, ACC, LT, C) dafür konfiguriert ist, die besagte zweite Verstärkung (G12) und die besagte dritte Verstärkung (G21) in Abhängigkeit von der besagten geschätzten Kreuzkorrelation (R[m]) gemäß der folgenden Gleichung zu berechnen:

$$G12 = G21 = \frac{-\sin(\mathrm{asin}(R[m])/2)}{2\cos^2(\mathrm{asin}(R[m])/2) - 1},$$

wobei G12 die besagte zweite Verstärkung, G21 die besagte dritte Verstärkung und R[m] die besagte geschätzte Kreuzkorrelation darstellt.

4. Kohärenter optischer Empfänger (RX) nach einem beliebigen der vorstehenden Ansprüche, wobei die besagte zweite digitale Schaltung (MA, M, ACC, LT1, LT2; MA, M, ACC, LT, C) ein Multiplikations- und Additionsmodul (MA) und einen an den Ausgang der besagten ersten digitalen Schaltung (A11, A12, A21, A22, S1, S2) angeschlossenen Akkumulator (ACC) umfasst, wobei:

- das besagte Multiplikations- und Additionsmodul (MA) dafür konfiguriert ist, N Abtastwerte der besagten phasenverschiebungskompensierten In-Phase-Komponente ($I_k{}^*$) und N Abtastwerte der besagten phasenverschiebungskompensierten Quadratur-Komponente ($Q_k{}^*$) von der besagten ersten digitalen Schaltung (A11, A12, A21, A22, S1, S2) zu empfangen, wobei N eine ganze Zahl gleich oder größer als 1 ist, und eine Summe (S) gemäß der folgenden Gleichung zu berechnen:

$$S = \sum_{k=1}^{N} I_k{}^* Q_k{}^*$$

wobei S die besagte Summe, $I_k{}^*$ die besagten N Abtastwerte der phasenverschiebungskompensierten In-Phase-Komponente und $Q_k{}^*$ die besagten N Abtastwerte der besagten phasenverschiebungskompensierten Quadratur-Komponente darstellt; und
- der besagte Akkumulator (ACC) dafür konfiguriert ist, seinen Inhalt (R[m-1]) durch Hinzuaddieren der besagten Summe (S) zu aktualisieren, wodurch die besagte geschätzte Kreuzkorrelation (R[m]) erhalten wird.

5. Kohärenter optischer Empfänger (RX) nach Anspruch 4, wobei die besagte zweite digitale Schaltung (MA, M, ACC, LT1, LT2; MA, M, ACC, LT, C) weiterhin einen Multiplizierer (M) umfasst, welcher zwischen dem besagten Multiplikations- und Additionsmodul (MA) und dem besagten Akkumulator (ACC) angeordnet ist, wobei der besagte Multiplizierer (M) dafür konfiguriert ist, die besagte Summe (S) mit einem Anpassungsfaktor (K) zu multiplizieren, bevor sie an den besagten Akkumulator (ACC) weitergeleitet wird.

6. Kohärenter optischer Empfänger (RX) nach Anspruch 4 oder 5, wobei das besagte Multiplikations- und Additionsmodul (MA) dafür konfiguriert ist, eine Teilmenge der besagten N Abtastwerte der besagten phasenverschiebungskompensierten In-Phase-Komponente ($I_k{}^*$) und der besagten N Abtastwerte der besagten phasenverschiebungskompensierten Quadratur-Komponente ($Q_k{}^*$) auszuwählen und die besagte Summe (S) gemäß der besagten ausgewählten Teilmenge zu berechnen.

7. Kohärenter optischer Empfänger (RX) nach einem beliebigen der vorstehenden Ansprüche, wobei die besagte zweite digitale Schaltung (MA, M, ACC, LT1, LT2; MA, M, ACC, LT, C) weiterhin eine erste Lookup-Tabelle (LT1) und eine zweite Lookup-Tabelle (LT2) umfasst, wobei:

- Die besagte erste Lookup-Tabelle (LT1) eine Anzahl von möglichen Kreuzkorrelationswerten ($R_i$) und eine selbe Anzahl von entsprechenden möglichen Werten ($G11_i$) der besagten ersten Verstärkung (G11), berechnet gemäß der folgenden Gleichung, speichert:

$$G11_i = \frac{\cos(\operatorname{asin}(R_i)/2)}{2\cos^2(\operatorname{asin}(R_i)/2) - 1},$$

wobei $R_i$ die besagte Anzahl von möglichen Kreuzkorrelationswerten und $G11_i$ die besagte selbe Anzahl von entsprechenden möglichen Werten der besagten ersten Verstärkung darstellt; und

- die besagte zweite Lookup-Tabelle (LT2) die besagte Anzahl von möglichen Kreuzkorrelationswerten ($R_i$) und die besagte selbe Anzahl von entsprechenden möglichen Werten (G12i) der besagten zweiten Verstärkung (G12), berechnet gemäß der folgenden Gleichung, speichert:

$$G12_i = \frac{-\sin(\operatorname{asin}(R_i)/2)}{2\cos^2(\operatorname{asin}(R_i)/2) - 1},$$

wobei $R_i$ die besagte Anzahl von möglichen Kreuzkorrelationswerten und $G12_i$ die besagte selbe Anzahl von entsprechenden möglichen Werten der besagten zweiten Verstärkung darstellt.

8. Kohärenter optischer Empfänger (RX) nach Anspruch 7, wobei:

- Die besagte erste Lookup-Tabelle (LT1) dafür konfiguriert ist, die besagte geschätzte Kreuzkorrelation (R[m]) zu empfangen, unter der besagten Anzahl von möglichen Kreuzkorrelationswerten ($R_i$) denjenigen möglichen Kreuzkorrelationswert zu ermitteln, welcher der besagten geschätzten Kreuzkorrelation (R[m]) am nächsten liegt, und die besagte erste Verstärkung (G11) und die besagte vierte Verstärkung (G22) gleichwertig mit der einen der besagten selben Anzahl von entsprechenden möglichen Werten ($G11_i$) der besagten ersten Verstärkung (G11), welche dem besagten am nächsten liegenden möglichen Kreuzkorrelationswert entspricht, einzustellen.
- Die besagte zweite Lookup-Tabelle (LT2) dafür konfiguriert ist, die besagte geschätzte Kreuzkorrelation (R[m]) zu empfangen, unter der besagten Anzahl von möglichen Kreuzkorrelationswerten ($R_i$) denjenigen möglichen Kreuzkorrelationswert zu ermitteln, welcher der besagten geschätzten Kreuzkorrelation (R[m]) am nächsten liegt, und die besagte zweite Verstärkung (G12) und die besagte dritte Verstärkung (G21) gleichwertig mit der einen der besagten selben Anzahl von entsprechenden möglichen Werten ($G12_i$) der besagten zweiten Verstärkung (G12), welche dem besagten am nächsten liegenden möglichen Kreuzkorrelationswert entspricht, einzustellen.

9. Kohärenter optischer Empfänger (RX) nach einem beliebigen der Ansprüche 1 bis 6, wobei die besagte zweite digitale Schaltung (MA, M, ACC, LT1, LT2; MA, M, ACC, LT, C) weiterhin eine Lookup-Tabelle (LT) und ein Berechnungsmodul (C) umfasst, wobei:

- das besagte Berechnungsmodul (C) dafür konfiguriert ist, die besagte geschätzte Kreuzkorrelation (R[m]) zu empfangen und die besagte zweite Verstärkung (G12) und die besagte dritte Verstärkung (G21) gemäß der folgenden Gleichung zu berechnen:

$$G12 = G21 = \frac{-\sin(\operatorname{asin}(R[m])/2)}{2\cos^2(\operatorname{asin}(R[m])/2) - 1},$$

wobei G11 die besagte erste Verstärkung, G22 die besagte vierte Verstärkung und R[m] die besagte geschätzte Kreuzkorrelation darstellt; und

- die besagte Lookup-Tabelle (LT) eine Anzahl von möglichen Werten ($G12_i$) der besagten zweiten Verstärkung (G12) und eine selbe Anzahl von entsprechenden möglichen Werten ($G11_i$) der besagten ersten Verstärkung (G11), berechnet gemäß der folgenden Gleichung, speichert:

$$G11_i = 1 + \frac{3}{2}G12_i^2,$$

wobei $G12_i$ die besagte Anzahl von möglichen Werten der besagten zweiten Verstärkung und $G11_i$ die besagte selbe Anzahl von entsprechenden möglichen Werten der besagten ersten Verstärkung darstellt.

10. Kohärenter optischer Empfänger (RX) nach Anspruch 9, wobei die besagte Lookup-Tabelle (LT) dafür konfiguriert ist, die besagte berechnete zweite Verstärkung (G12) von dem besagten Berechnungsmodul (C) zu empfangen, unter der besagten Anzahl von möglichen Werten ($G12_i$) der besagten zweiten Verstärkung (G12) denjenigen möglichen zweiten Verstärkungswert zu ermitteln, welcher der besagten berechneten zweiten Verstärkung (G12) am nächsten liegt, und die besagte erste Verstärkung (G11) und die besagte vierte Verstärkung gleichwertig mit der einen der besagten selben Anzahl von entsprechenden möglichen Werten ($G11_i$) der besagten ersten Verstärkung (G12), welche dem besagten am nächsten liegenden möglichen zweiten Verstärkungswert entspricht, einzustellen.

11. Kohärenter optischer Empfänger (RX) nach einem beliebigen der vorstehenden Ansprüche, wobei der besagte Phasenverschiebungskompensator (PSC, PSC') ein ASIC-Modul oder ein FPGA-Modul ist.

12. Knoten für ein optisches Kommunikationsnetzwerk, wobei der besagte Knoten einen kohärenten optischen Empfänger (RX) gemäß einem beliebigen der vorstehenden Ansprüche umfasst.

13. Optisches Kommunikationsnetzwerk, umfassend einen Knoten gemäß Anspruch 12.

14. Verfahren zur Kompensierung einer Phasenverschiebung (□) zwischen einer In-Phase-Komponente (I') und einer Quadratur-Komponente (Q') eines an einem kohärenten optischen Empfänger (RX) für ein optisches Kommunikationsnetzwerk empfangenen modulierten optischen Signals (s(t)), wobei das besagte Verfahren umfasst:

- Addieren der besagten In-Phase-Komponente (I'), multipliziert mit einer ersten Verstärkung (G11), und der besagten Quadratur-Komponente (Q'), multipliziert mit einer zweiten Verstärkung (G12), wodurch eine phasenverschiebungskompensierte In-Phase-Komponente ($I_k$*) bereitgestellt wird,
- Addieren der besagten In-Phase-Komponente (I'), multipliziert mit einer dritten Verstärkung (G21), und der besagten Quadratur-Komponente (Q'), multipliziert mit einer vierten Verstärkung (G22), wodurch eine phasenverschiebungskompensierte Quadratur-Komponente ($Q_k$*) bereitgestellt wird;
- Schätzen einer Kreuzkorrelation (R[m]) zwischen der besagten phasenverschiebungskompensierten In-Phase-Komponente ($I_k$*) und der besagten phasenverschiebungskompensierten Quadratur-Komponente ($Q_k$*), und
- nachträgliches Berechnen der besagten ersten Verstärkung (G11), der besagten zweiten Verstärkung (G12), der besagten dritten Verstärkung (G21) und der besagten vierten Verstärkung (G22) in Abhängigkeit von der besagten geschätzten Kreuzkorrelation (R[m]).

## Revendications

1. Récepteur optique cohérent (RX) pour un réseau de communication optique, ledit récepteur optique cohérent (RX) étant configuré pour recevoir un signal optique modulé (s(t)) et pour traiter ledit signal optique modulé (s(t)) afin de générer une composante en phase (I') et une composante en quadrature (Q'), ledit récepteur optique cohérent (RX) comprenant un compensateur de distorsion de phase (PSC, PSC') comprenant à son tour :

- un premier circuit numérique (A11, A12, A21, A22, S1, S2) configuré pour fournir :

- une composante en phase à distorsion de phase compensée ($I_k$*) en tant que somme de ladite composante en phase (I') multipliée par un premier gain (G11) et de ladite composante en quadrature (Q') multipliée par un deuxième gain (G12) ; et
- une composante en quadrature à distorsion de phase compensée ($Q_k$*) en tant que somme de ladite composante en phase (I') multipliée par un troisième gain (G21) et de ladite composante en quadrature (Q') multipliée par un quatrième gain (G22) ; et

- un deuxième circuit numérique (MA, M, ACC, LT1, LT2 ; MA, M, ACC, LT, C) connecté rétroactivement entre une sortie et une entrée de commande dudit premier circuit numérique (A11, A12, A21, A22, S1, S2) et configuré pour calculer ledit premier gain (G11), ledit deuxième gain (G12), ledit troisième gain (G21) et ledit quatrième gain (G22) en fonction d'une corrélation croisée estimée (R[m]) entre ladite composante en phase à distorsion de phase compensée ($I_k$*) et ladite composante en quadrature à distorsion de phase compensée ($Q_k$*).

**2.** Récepteur optique cohérent (RX) selon la revendication 1, dans lequel ledit deuxième circuit numérique (MA, M, ACC, LT1, LT2; MA, M, ACC, LT, C) est configuré pour calculer ledit premier gain (G11) et ledit quatrième gain (G22) en fonction de ladite corrélation croisée estimée (R[m]) conformément à l'équation suivante :

$$G11 = G22 = \frac{\cos(a\sin(R[m])/2)}{2\cos^2(a\sin(R[m])/2) - 1},$$

G11 étant ledit premier gain, G22 étant ledit quatrième gain et R[m] étant ladite corrélation croisée estimée.

**3.** Récepteur optique cohérent (RX) selon la revendication 1 ou 2, dans lequel ledit deuxième circuit numérique (MA, M, ACC, LT1, LT2 ; MA, M, ACC, LT, C) est configuré pour calculer ledit deuxième gain (G12) et ledit troisième gain (G21) en fonction de ladite corrélation croisée estimée (R[m]) conformément à l'équation suivante :

$$G12 = G21 = \frac{-\sin(a\sin(R[m])/2)}{2\cos^2(a\sin(R[m])/2) - 1},$$

G12 étant ledit deuxième gain, G21 étant ledit troisième gain et R[m] étant ladite corrélation croisée estimée.

**4.** Récepteur optique cohérent (RX) selon l'une quelconque des revendications précédentes, dans lequel ledit deuxième circuit numérique (MA, M, ACC, LT1, LT2 ; MA, M, ACC, LT, C) comprend un module multiplier et ajouter (MA) et un accumulateur (ACC) connectés à la sortie dudit premier circuit numérique (A11, A12, A21, A22, S1, S2), dans lequel :

- ledit module multiplier et ajouter (MA) est configuré pour recevoir N échantillons de ladite composante en phase à distorsion de phase compensée ($I_k^*$) et N échantillons de ladite composante en quadrature à distorsion de phase compensée ($Q_k^*$) à partir dudit premier circuit numérique (A11, A12, A21, A22, S1, S2), N étant un nombre entier supérieur ou égal à 1, et pour calculer une somme (S) conformément à l'équation suivante :

$$S = \sum_{k=1}^{N} I_k^* \cdot Q_k^*,$$

S étant ladite somme, $I_k^*$ étant lesdits N échantillons de la composante en phase à distorsion de phase compensée et $Q_k^*$ étant lesdits N échantillons de ladite composante en quadrature à distorsion de phase compensée ; et
- ledit accumulateur (ACC) est configuré pour mettre à jour son contenu (R[m-1]) en lui ajoutant ladite somme (S), obtenant ainsi ladite corrélation croisée estimée (R[m]).

**5.** Récepteur optique cohérent (RX) selon la revendication 4, dans lequel ledit deuxième circuit numérique (MA, M, ACC, LT1, LT2 ; MA, M, ACC, LT, C) comprend en outre un multiplicateur (M) interposé entre ledit module multiplier et ajouter (MA) et ledit accumulateur (ACC), ledit multiplicateur (M) étant configuré pour multiplier ladite somme (S) par un facteur d'adaptation (K) avant de la transférer vers ledit accumulateur (ACC).

**6.** Récepteur optique cohérent (RX) selon la revendication 4 ou 5, dans lequel ledit module multiplier et ajouter (MA) est configuré pour sélectionner un sous-ensemble desdits N échantillons de ladite composante en phase à distorsion de phase compensée ($I_k^*$) et desdits N échantillons de ladite composante en quadrature à distorsion de phase compensée ($Q_k^*$), et pour calculer ladite somme (S) conformément audit sous-ensemble sélectionné.

**7.** Récepteur optique cohérent (RX) selon l'une quelconque des revendications précédentes, dans lequel ledit deuxième circuit numérique (MA, M, ACC, LT1, LT2 ; MA, M, ACC, LT, C) comprend en outre une première table de consultation (LT1) et une deuxième table de consultation (LT2), dans lequel :

- ladite première table de consultation (LT1) stocke un nombre de valeurs de corrélation croisée possibles ($R_i$) et un même nombre de valeurs possibles correspondantes ($G11_i$) dudit premier gain (G11) calculé conformément à l'équation suivante :

$$G11_i = \frac{\cos(\mathrm{asin}(R_i)/2)}{2\cos^2(\mathrm{asin}(R_i)/2)-1},$$

$R_i$ étant ledit nombre de valeurs de corrélation croisée possibles et $G11_i$ étant ledit même nombre de valeurs possibles correspondantes dudit premier gain ; et
- ladite deuxième table de consultation (LT2) stocke ledit nombre de valeurs de corrélation croisée possibles ($R_i$) et ledit même nombre de valeurs possibles correspondantes ($G12_i$) dudit deuxième gain (G12) calculé conformément à l'équation suivante :

$$G12_i = \frac{-\sin(\mathrm{asin}(R_i)/2)}{2\cos^2(\mathrm{asin}(R_i)/2)-1},$$

$R_i$ étant ledit nombre de valeurs de corrélation croisée possibles et $G12_i$ étant ledit même nombre de valeurs possibles correspondantes dudit deuxième gain.

**8.** Récepteur optique cohérent (RX) selon la revendication 7, dans lequel :

- ladite première table de consultation (LT1) est configurée pour recevoir ladite corrélation croisée estimée (R[m]), afin de déterminer, parmi ledit nombre de valeurs de corrélation croisée possibles ($R_i$), la valeur de corrélation croisée possible la plus proche de ladite corrélation croisée estimée (R[m]), et pour définir ledit premier gain (G11) et ledit quatrième gain (G22) égaux à la valeur parmi ledit même nombre de valeurs possibles correspondantes ($G11_i$) dudit premier gain (G11) qui correspond à ladite valeur de corrélation croisée possible la plus proche ;
- ladite deuxième table de consultation (LT2) est configurée pour recevoir ladite corrélation croisée estimée (R[m]), afin de déterminer, parmi ledit nombre de valeurs de corrélation croisée possibles ($R_i$), la valeur de corrélation croisée possible la plus proche de ladite corrélation croisée estimée (R[m]), et pour définir ledit deuxième gain (G12) et ledit troisième gain (G21) égaux à la valeur parmi ledit même nombre de valeurs possibles correspondantes ($G12_i$) dudit deuxième gain (G12) qui correspond à ladite valeur de corrélation croisée possible la plus proche.

**9.** Récepteur optique cohérent (RX) selon l'une quelconque des revendications 1 à 6, dans lequel ledit deuxième circuit numérique (MA, M, ACC, LT1, LT2 ; MA, M, ACC, LT, C) comprend en outre une table de consultation (LT) et un module de calcul (C), dans lequel :

- ledit module de calcul (C) est configuré pour recevoir ladite corrélation croisée estimée (R[m]) et pour calculer ledit deuxième gain (G12) et ledit troisième gain (G21) conformément à l'équation suivante :

$$G12 = G21 = \frac{-\sin(\mathrm{asin}(R[m])/2)}{2\cos^2(\mathrm{asin}(R[m])/2)-1},$$

G11 étant ledit premier gain, G22 étant ledit quatrième gain et R[m] étant ladite corrélation croisée estimée ; et
- ladite table de consultation (LT) stocke un nombre de valeurs possibles ($G12_i$) dudit deuxième gain (G12) et un même nombre de valeurs possibles correspondantes ($G11_i$) dudit premier gain (G11) calculé conformément à l'équation suivante :

$$G11_i = 1 + \frac{3}{2}G12_i^{\,2},$$

G12$_i$ étant ledit nombre de valeurs possibles dudit deuxième gain et G11$_i$ étant ledit même nombre de valeurs possibles correspondantes dudit premier gain.

10. Récepteur optique cohérent (RX) selon la revendication 9, dans lequel ladite table de consultation (LT) est configurée pour recevoir ledit deuxième gain calculé (G12) à partir dudit module de calcul (C), afin de déterminer, parmi ledit nombre de valeurs possibles (G12$_i$) dudit deuxième gain (G12), la deuxième valeur de gain possible la plus proche dudit deuxième gain calculé (G12) et pour définir ledit premier gain (G11) et ledit quatrième gain (G22) égaux à la valeur parmi ledit même nombre de valeurs possibles correspondantes (G11$_i$) dudit premier gain (G11 ) qui correspond à ladite deuxième valeur de gain possible la plus proche.

11. Récepteur optique cohérent (RX) selon l'une quelconque des revendications précédentes, dans lequel ledit compensateur de distorsion de phase (PSC, PSC') est un module ASIC ou un module FPGA.

12. Noeud pour un réseau de communication optique, ledit noeud comprenant un récepteur optique cohérent (RX) selon l'une quelconque des revendications précédentes.

13. Réseau de communication optique comprenant un noeud selon la revendication 12.

14. Procédé pour compenser une distorsion de phase ($\varepsilon$) entre une composante en phase (I') et une composante en quadrature (Q') d'un signal optique modulé (s(t)) reçu au niveau d'un récepteur optique cohérent (RX) pour un réseau de communication optique, ledit procédé comprenant les étapes suivantes :

- ajouter ladite composante en phase (I') multipliée par un premier gain (G11) et ladite composante en quadrature (Q') multipliée par un deuxième gain (G12), fournissant ainsi une composante en phase à distorsion de phase compensée ($I_k$*) ;
- ajouter ladite composante en phase (I') multipliée par un troisième gain (G21) et ladite composante en quadrature (Q') multipliée par un quatrième gain (G22), fournissant ainsi une composante en quadrature à distorsion de phase compensée ($Q_k$*) ;
- estimer une corrélation croisée (R[m]) entre ladite composante en phase à distorsion de phase compensée ($I_k$*) et ladite composante en quadrature à distorsion de phase compensée ($Q_k$*) ; et
- calculer rétroactivement ledit premier gain (G11), ledit deuxième gain (G12), ledit troisième gain (G21) et ledit quatrième gain (G22) en fonction de ladite corrélation croisée estimée (R[m]).

## Figure 1

Figure 2

Figure 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6917031 B
- EP 1986352 A